# EUROPEAN PATENT SPECIFICATION

(11) **EP 3 154 759 B1**
(45) Date of publication and mention of the grant of the patent: **18.04.2018**
(21) Application number: 15732403.9
(22) Date of filing: 25.05.2015
(51) Int. Cl.: B29C 35/00, B29C 35/02, B29C 47/92, B29C 47/00

(54) **THERMOREGULATION DEVICE OR CIRCUIT HIGH-TEMPERATURE MOULDS OR SYSTEMS GENERAL**
TEMPERATURREGULIERUNGSVORRICHTUNG ODER -KREISLAUF FÜR HOCHTEMPERATURFORMEN ODER -SYSTEME IM ALLGEMEINEN
DISPOSITIF OU CIRCUIT DE THERMORÉGULATION POUR DES MOULES OU SYSTÈMES À HAUTE TEMPÉRATURE

(30) Priority: 10.06.2014 IT PD20140141
(43) Date of publication of application: 19.04.2017
(73) Proprietor: Tecnoidee SrL, 25080 Muscoline (BS) (IT)
(72) Inventor: BONVICINI, Paolo, I-25080 Muscoline (BS) (IT)
(74) Representative: Vinci, Marcello
(86) International application number: PCT/IB2015/053851
(87) International publication number: WO 2015/189729

(56) References cited:
- EP-A1- 1 859 877
- EP-A2- 1 772 246
- DE-U1-202006 020 117
- US-A- 3 891 370

## Description

The present invention concerns the systems that require temperature to be controlled for heating and/or cooling purposes. The sectors in which these systems are used include, for example, die casting, moulding and extrusion of plastic materials, glass production etc.; in particular, the present invention concerns a new thermoregulation device or circuit with improved functions.

The die casting process will now be considered, as an example of these types of process.

Die casting systems are known which are used to produce metal objects obtained through the die casting process, a process during which molten metal is injected in a metal die under high pressure.

The die is constituted by two halves made of a metallic material with high melting point, generally steel or cast iron, said halves being suited to be pressed against each other under high pressure. The metal with which the piece has to be made is injected in said die and successively cooled until it solidifies.

The cooling of the piece is obtained by means of a thermoregulation circuit in which a fluid circulates, located inside the die. Once the piece has cooled down and solidified, the die is opened in order to extract the piece.

EP1772246 relates to a mold temperature regulating apparatus according to the preamble of claim 1.

The subject of the present invention is a new thermoregulation device or circuit with improved functions, suited to be used in die casting systems.

It is one object of the present invention to provide a device or circuit capable of regulating the temperature and the pressure of the fluid circulating therein according to the needs, without requiring the fluid to be recharged.

It is another object of the invention to provide a device or circuit that is capable of conveying the quantity of fluid considered suitable to one or more areas of the die, by means of one or more control valves for the introduction of the fluid.

An advantage offered by the present invention lies in that it can operate in two different modes, thanks to the breather valve that makes it possible to regulate the pressure and the temperature.

A further advantage is represented by the fact that it is possible to lower the pressure inside the circuit by means of a vacuum pump. During heating with the circuit under pressure, the use of said vacuum pump makes it possible to lower the pressure, thus reducing any stress on the pipes and circuits of the die.

Another advantage lies in that during the cooling step said vacuum pump makes it possible to lower the pressure inside the die circuit and this allows the fluid (water) to evaporate at temperatures below 100°C.

Thanks to the change of state, from liquid to vapour, of the used fluid even at temperatures below 100°C, it is possible to remove large quantities of heat at lower temperatures than with traditional systems.

Another advantage lies in that the invention makes it possible to eliminate the use of pumps for pressurizing the fed fluid up to temperatures of 170°C, with pressure up to 7 bars.

In its preferred embodiment, the new thermoregulation device or circuit comprises:
a line for feeding the fluid into said circuit, provided with at least one feed valve and at least one pressurizing pump for the injection of pressurized fluid into at least one first tank;
said at least one first tank, provided with at least one resistance suited to heat said fluid and one or more sensors suited to measure the level and the pressure of the fluid in said first tank with a resistance;
at least one recirculation pump for the circulation of the fluid in said circuit;
one or more control valves for the injection of fluid in one or more points or areas of use, for example of one or more dies or areas to be thermoregulated in general; said control valves can be physically integrated in said device or located in a remote position, for example on the edge of the die or on the press or in any case in a position near the area of use;
at least one vacuum pump for drawing the fluid and mixing the fluid flowing out of said area of use with the fluid coming from at least one bypass located between said recirculation pump and said vacuum pump and possibly even cooled fluid coming from a heat exchanger;
said at least one constantly open bypass located between said recirculation pump and said vacuum pump;
at least one additional tank between said vacuum pump and said tank with a resistance;
at least one cooling line communicating with said vacuum pump upstream of the same through at least one regulating valve, said cooling line comprising at least one exchanger into which part of the fluid that circulates in the circuit downstream of said recirculation pump flows, for the heat exchange with a low temperature cooling fluid through a corresponding cooling valve;
at least one breather valve communicating with said additional tank, suited to open in order to reduce the temperature and the pressure of the fluid and to close in order to increase the temperature and the pressure of the fluid contained in the additional tank itself.

According to the invention, the new circuit or device also comprises at least one compressed air injection valve suited to pressurize the fluid in said additional tank. According to the invention, the new circuit or device may also comprise at least one forced cooling valve suited to cool the entirety of the circulating fluid before introducing it in the area of use.

The new circuit preferably comprises also at least one certified mechanical safety valve suited to intervene in case of overpressures.

The optimal operating parameters of the new thermoregulation circuit or device include: temperature of the operating fluid ranging between 10°C and 180°C and maximum operating pressure of 15 bars.

The new thermoregulation system can operate in two different modes, that is, at temperatures below 90°C and at temperatures above 90°C, said modes being respectively called "closed circuit with open valve" and "pressurized closed circuit". The operation of the new system includes the following steps:
a) the thermoregulation fluid is fed into the system through said at least one feed valve and said at least one pressurizing pump, wherein a level measuring device causes said valve to open/close. At least one tank provided with at least one electric resistance collects said fluid and the resistance provides for increasing the temperature of the circulating fluid until reaching a given value. Said at least one pressure sensor checks the operating pressure and, if necessary, intervenes in order to increase it when the suction pressure is insufficient, as described below;
b) once the feeding step has been completed, the feed valve is closed and the fluid is circulated in the entire circuit through said at least one recirculation pump;
c) the fluid is circulated in the area of use, meaning in the die or in the area to be thermoregulated, by means of one or more of said control valves, according to the needs; the number of said valves, for example, depends on the number of feeding circuits present in the die, which in turn depends on the size and shape of the die itself;
d) the fluid flowing out of said area of use returns to the thermoregulation circuit and, by means of said at least one vacuum pump, is introduced in said at least one additional tank and successively in said tank with a resistance; the fluid starts the cycle illustrated above again through said recirculation pump;
e) part of said fluid circulating in the thermoregulation circuit can circulate in said constantly open bypass between said recirculation pump and said vacuum pump; in this way, in case of overpressures it is possible to lower the pressure of the fluid inside the system at any time;
f) during the heating step, the fluid is heated up to the required temperature, said heating step taking place inside said tank through said resistance; during this step said at least one regulating valve communicating with said fluid cooling line is closed;
g) during the fluid cooling step, in case of overtemperatures said regulating valve opens allowing the passage of part of the fluid, collected before injection in the die, into said exchanger and its reintroduction in the thermoregulation circuit;
h) said exchanger, in its turn, is cooled through said separate low-temperature cooling line, wherein said exchanger is activated through said at least one cooling valve;
i) with temperature values below 90°C, said at least one breather valve communicating with said additional tank remains open; the thermoregulation circuit is in the configuration called "closed circuit with open valve";
j) on the contrary, in order to maintain temperature values above 90°C, said breather valve remains closed; the thermoregulation circuit is in the configuration called "pressurized closed circuit";
k) in said configuration defined as closed circuit with open tank , the pressure inside said additional tank and said tank with a resistance approximatively corresponds to the atmospheric pressure, while the pressure measured by the sensor upstream of said vacuum pump can be lower than the atmospheric pressure, wherein said lower pressure is created by said vacuum pump. During the heating step with pressurized circuit, the use of said vacuum pump makes it possible to lower the pressure, reducing any stress on the pipes and circuits of the die. The action of the vacuum pump, which makes it possible to lower the pressure inside the circuit of the die, in said configuration with closed circuit with open valve , that is, with open breather valve, allows water to evaporate even at temperatures below 100°C, thus removing large quantities of heat even at temperatures below 100°C thanks to the passage of state, from liquid to vapour, of the used fluid;
l) the fluid that flows into said additional tank is obtained by mixing the fluid coming from the die with the fluid coming from said bypass and possibly the cooled fluid coming from said exchanger through said regulating valve; in this way, the fluid reaches the additional tank when it has already cooled down; therefore, the cooling of the fluid does not take place in the exchanger, rather it takes place inside said vacuum pump through a mixing operation;
m) according to the invention, in order to pressurize the circuit at least one compressed air injection valve is activated, which makes it possible to increase the pressure up to, for example, 6 bars with no need to activate the pressurizing pump; thanks to said compressed air injection valve, the pressurizing pump can be excluded up to an operating temperature of 170°, with pressure up to 7 bars;
n) according to the invention, in order to activate the forced cooling system it is necessary to close at least one valve on the delivery line of the recirculation pump, or forced cooling valve, which forces the entirety of the fluid to pass through the exchanger before reaching its point of use;
o) the certified mechanical safety valve intervenes if the pressure in the circuit exceeds the maximum accepted pressure.

The characteristics of the new thermoregulation device or circuit will be illustrated in greater detail in the following description with reference to the attached drawings that are enclosed hereto by way of non-limiting example.

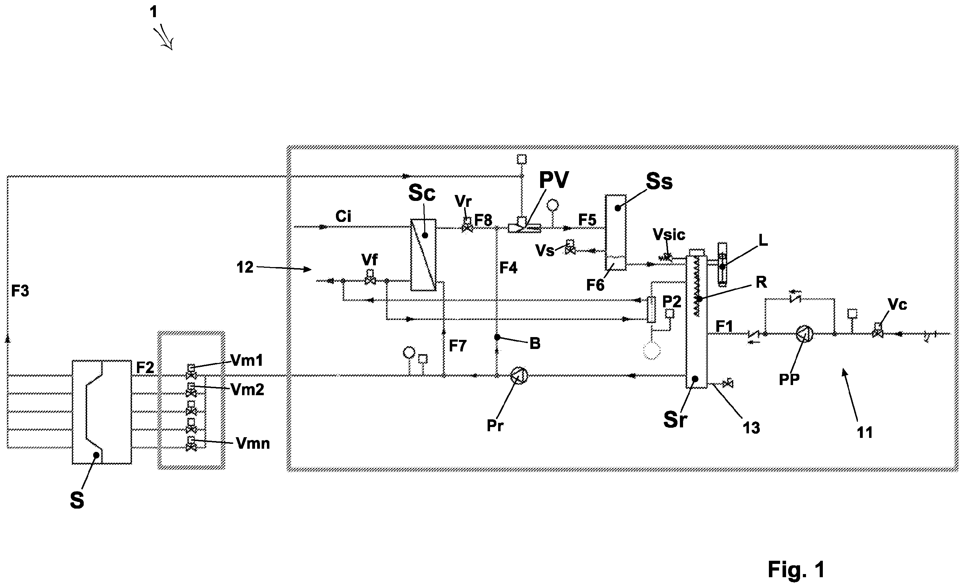

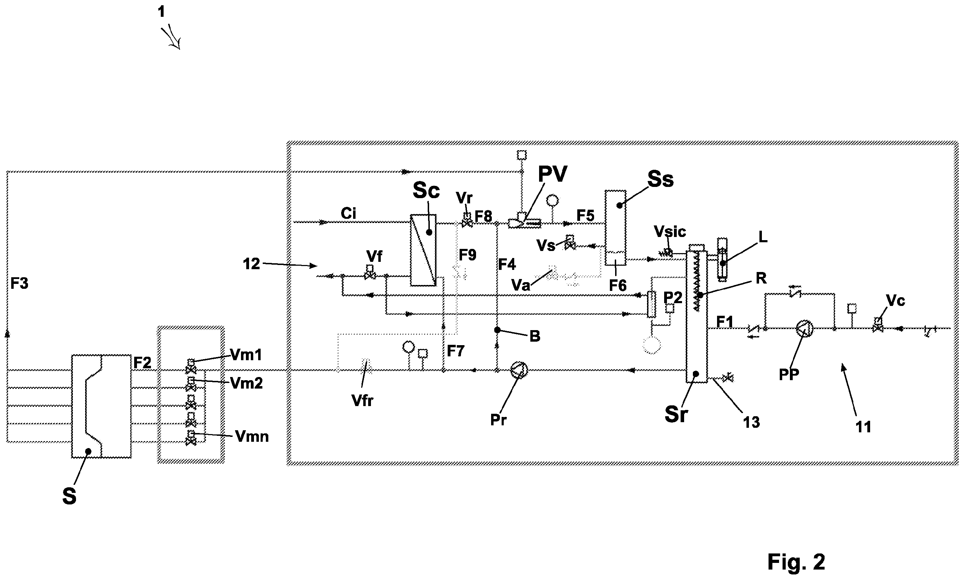

Figure 1 shows a first embodiment of the new device or circuit (1), while Figure 2 shows the new device or circuit (1) with some optional components and in particular a forced cooling valve (Vfr) and a compressed air injection valve (Va).

The invention is a new thermoregulation device or circuit (1) for high-temperature systems. The example shown in the figures and described here below illustrates a thermoregulation device or circuit particularly suited to be used in die casting systems comprising at least one die (S).

The new thermoregulation circuit (1) comprises at least one feeding line (11) suited to feed the fluid (F1) into said circuit (1), said feeding line (11) in its turn comprising at least one feed valve (Vc) and at least one pressurizing pump (PP) for the injection of pressurized fluid into at least one first tank (Sr).

Said circuit (1) may conveniently comprise also at least one fluid discharge line (13), for example to discharge the fluid collected from said first tank (Sr).

Said at least one first tank (Sr) in its turn comprises at least one resistance (R) suited to heat said fluid and one or more sensors suited to measure the level (L) and the pressure (P2) of the fluid in said first tank (Sr) with a resistance (R).

At least one recirculation pump (Pr) causes the fluid to circulate in said thermoregulation circuit (1) and is located upstream of said die (S).

One or more control valves (Vm1, Vm2, ..., Vmn) located upstream of said die (S) allow a given quantity (F2) of fluid to be injected in one or more points or areas of the die itself.

The assembly constituted by said control valves (Vm1, Vm2, ..., Vmn) can be physically integrated in the rest of the device or circuit (1) or located in a remote position, at any distance from the other components positioned on the die (S).

The new thermoregulation circuit (1) also comprises at least one vacuum pump (PV). Said vacuum pump provides for drawing the fluid (F3) coming from said die (S) and mixing said fluid (F3) flowing out of the die (S) with a part of fluid (F4) coming from at least one constantly open bypass (B) located between said recirculation pump (Pr), upstream of said die (S), and said vacuum pump (PV).

The fluid (F5) flowing out of said vacuum pump (PV) is introduced in at least one additional tank (Ss) upstream of said tank (Sr) with a resistance (R).

On said additional tank (Ss) there is at least one breather valve (Vs) suited to open/close in order to reduce/increase the pressure and the temperature of the fluid (F6) contained in the additional tank (Ss) itself.

Said additional tank (Ss) is also preferably provided with at least one compressed air injection valve (Va) for pressurizing the fluid (F6) in said additional tank (Ss) (see Figure 2).

The new circuit (1) also comprises at least one cooling line (12) between said recirculation pump (Pr) and said vacuum pump (PV).

Said cooling line (12) comprises at least one exchanger (Sc) into which part of the fluid (F7) coming from the circuit downstream of said recirculation pump (Pr) flows. Inside said exchanger (Sc), said fluid (F7) exchanges heat with a low temperature cooling fluid (Ci), wherein said exchanger (Sc) is activated by means of at least one cooling valve (Vf).

The cooled fluid (F8) flowing out of said exchanger (Sc) is introduced in said vacuum pump (PV) and mixed with said fluid (F3) flowing out of said die (S) and with said fluid (F4) circulating in said bypass (B).

Said exchanger (Sc) communicates with said vacuum pump (PV) through at least one regulating valve (Vr) that remains closed during the fluid heating step and opens when it is necessary to cool the fluid (F5) flowing into the additional tank (Ss).

As shown in Figure 2, the new circuit (1) may also preferably comprise at least one further forced cooling valve (Vfr) on the delivery line of said recirculation pump (Pr), wherein, in the forced cooling step, if any, said forced cooling valve (Vfr) closes and forces the entirety of the fluid to flow through said exchanger (Sc) before reaching the point of use (F9).

The new circuit (1) comprises also at least one certified mechanical safety valve (Vsic) suited to intervene if the pressure in the circuit exceeds the maximum accepted pressure.

Therefore, with reference to the above description and the attached drawings, the following claims are expressed.

## Claims

1. Thermoregulation device or circuit (1) for die casting systems, moulding systems, plastic extrusion systems, systems for the production of glass, or for high-temperature systems in general comprising at least one mould (S) or area to thermoregulate or area of use, said thermoregulation circuit (1) comprising at least one feeding line (11) suited to convey the fluid (F1) into said circuit (1), at least one pump (Pr), or recirculation pump, suited to circulate the fluid (F1) in said circuit (1), and means (R, L, P2, PV) suited to regulate the temperature and the pressure of the fluid (F) circulating in said circuit (1), **characterized in that** it comprises also:
at least one constantly open bypass (B) in which the entirety or part (F4) of said fluid flows, bypassing said die (S) or area of use, said bypass (B) being positioned between said recirculation pump (Pr), upstream of said die (S) or area of use, and at least one vacuum pump (PV);
said at least one vacuum pump (PV) suited to draw the fluid (F3) coming from said die (S) or area of use and to mix it with said fluid (F4) coming from said at least one bypass (B);
at least one first tank (Sr) suited to contain the fluid (F1) coming from said feeding line (11), said first tank (Sr) in turn comprising at least one resistance (R) for heating said fluid (F),
and wherein said mixed fluid (F5) held in said vacuum pump (PV) is directly or indirectly introduced in said tank (Sr) provided with a resistance (R) so that it is recirculated in said circuit (1).

2. Thermoregulation circuit (1) according to claim 1, **characterized in that** it comprises at least one additional tank (Ss) downstream of said vacuum pump (PV) and upstream of said tank (Sr) provided with a resistance (R), in which said mixed fluid (F5) flowing out of said vacuum pump (PV) is introduced, and wherein on said additional tank (Ss) there is at least one breather valve (Vs) suited to open/close in order to reduce/increase the pressure and the temperature of the fluid (F6) contained in the additional tank (Ss), said fluid (F6) flowing out of said additional tank (Ss) being introduced in said tank (Sr) with a resistance in order to be recirculated in said circuit (1).

3. Thermoregulation circuit (1) according to claim 2, **characterized in that** when said breather valve (Vs) is open said vacuum pump (PV) lowers the pressure inside said mould (S) and allows said fluid to evaporate at temperatures below 100°C.

4. Thermoregulation circuit (1) according to claim 2, **characterized in that** when said breather valve (Vs) is closed, that is, when the circuit (1) is closed and pressurized, and while the fluid circulating in the circuit (1) is being heated, said vacuum pump (PV) lowers the pressure inside said die (S), thus also reducing any stress on the pipes and circuits of the die itself.

5. Thermoregulation circuit (1) according to the preceding claims, **characterized in that** it also comprises at least one cooling line (12) between said recirculation pump (Pr) and said vacuum pump (PV), said cooling line (12) comprising at least one exchanger (Sc), in which part of the fluid (F7) coming from the circuit downstream of said recirculation pump (Pr) enters and exchanges heat with a low temperature cooling fluid (Ci), and wherein the cooled fluid (F8) flowing out of said exchanger (Sc) is introduced in said vacuum pump (PV) and mixed with said fluid (F3) flowing out of said die (S) and with said fluid (F4) circulating in said bypass (B).

6. Thermoregulation circuit (1) according to the preceding claims, **characterized in that** it comprises one or more control valves (Vm1, Vm2, ..., Vmn) located upstream of said die (S) or area of use, said valves being suited to inject a given quantity (F2) of fluid in one or more points or areas of said die (S) or of said areas of use.

7. Thermoregulation circuit (1) according to the preceding claims, **characterized in that** said feeding line (11) in turn comprises at least one feeding valve (Vc) and at least one pressurizing pump (PP) for the injection of pressurized fluid into at least one first tank (Sr), and wherein when said feeding operation has been completed said feeding valve (Vc) is closed and the fluid is circulated in the entire circuit through said at least one recirculation pump (Pr).

8. Thermoregulation circuit (1) according to the preceding claims, **characterized in that** on said additional tank (Ss) there is also at least one compressed air injection valve (Va) for the pressurization of the fluid (F6) in said additional tank (Ss), such as to exclude the use of said pressurizing pump (PP).

9. Thermoregulation circuit (1) according to the preceding claims, **characterized in that** said exchanger (Sc) communicates with said vacuum pump (PV) through at least one regulating valve (Vr) that remains closed during the fluid heating step and is opened when it is necessary to cool the fluid (F5) that is flowing into the additional tank (Ss).

10. Thermoregulation circuit (1) according to the preceding claims, **characterized in that** it comprises at least one further forced cooling valve (Vfr) on the delivery line of said recirculation pump (Pr) and wherein, during the forced cooling step, if any, said forced cooling valve (Vfr) closes and forces the entirety of the fluid to pass through said exchanger (Sc) before entering said area of use.

## Patentansprüche

1. Wärmeregulierungsvorrichtung oder -kreis (1) für Druckgusssysteme, Formanlagen, Kunststoffextrusionsysteme, Systeme zur Herstellung von Glas sowie für Hochtemperatursysteme im Allgemeinen, wenigstens ein Formwerkzeug (S) oder einen Bereich, in dem die Wärme reguliert werden soll oder einen Einsatzbereich umfassend, wobei der besagte Wärmeregulierungskreis (1) Folgendes umfasst: wenigstens eine Zuleitung (11), welche geeignet ist, das Fluid (F1) in den besagten Kreis (1) einzuleiten, wenigstens eine Pumpe (Pr) bzw. Rezirkulationspumpe, dazu geeignet, das Fluid (F1) in dem besagten Kreis (1) zirkulieren zu lassen, sowie Mittel (R, L, P2, PV), die dazu geeignet sind, Temperatur und Druck des in dem besagten Kreis (1) zirkulierenden Fluids (F) zu regulieren, **dadurch gekennzeichnet, dass** er außerdem Folgendes umfasst:
wenigstens einen ständig geöffneten Bypass (B), in dem die Gesamtheit oder ein Teil (F4) des besagten Fluids fließt, der das besagte Formwerkzeug (S) bzw. der Einsatzbereich umgeht, wobei der besagte Bypass (B) zwischen der besagten Rezirkulationspumpe (Pr), stromaufwärts des besagten Formwerkzeugs (S) oder des besagten Einsatzbereichs, und wenigstens einer Vakuumpumpe (PV) positioniert ist;
wobei die besagte wenigstens eine Vakuumpumpe (PV) geeignet ist, das aus dem besagten Formwerkzeug (S) oder dem besagten Einsatzbereich ausfließende Fluid (F3) anzusaugen und mit dem besagten Fluid (F4) zu vermischen, das aus dem besagten wenigstens einen Bypass (B) ausfließt;
wenigstens einen ersten Behälter (Sr), dazu geeignet, das aus der besagten Zuleitung (11) kommende Fluid (F1) aufzunehmen, wobei der besagte Behälter (Sr) seinerseits wenigstens einen Widerstand (R) zum Erwärmen des besagten Fluids (F) umfasst,
und wobei das besagte in der Vakuumpumpe (PV) enthaltene, vermischte Fluid (F5) direkt oder indirekt in den besagten Behälter (Sr) geleitet wird, welcher mit einem Widerstand (R) versehen ist, so dass es in den besagten Kreis (1) zurückgeleitet wird.

2. Wärmeregulierungskreis (1) nach Patentanspruch 1, **dadurch gekennzeichnet, dass** er stromabwärts der besagten Vakuumpumpe (PV) und stromaufwärts des besagten, mit einem Widerstand (R) versehenen Behälter (Sr) wenigstens einen Zusatzbehälter (Ss) umfasst, in den das besagte, aus der besagten Vakuumpumpe (PV) ausfließende, vermischte Fluid (F5) eingeleitet wird, und wobei sich an dem besagten Zusatzbehälter (Ss) wenigstens ein Entlüftungsventil (Vs) befindet, dazu geeignet, sich zu öffnen/zu schließen, um den Druck und die Temperatur des im Zusatzbehälter (Ss) enthaltenen Fluids (6) zu senken/zu erhöhen, wobei das besagte, aus dem besagten Zusatzbehälter (Ss) ausfließende Fluid (F6) in den besagten Behälter (Sr) mit einem Widerstand geleitet wird, um in den besagten Kreis (1) zurückgeleitet zu werden.

3. Wärmeregulierungskreis (1) nach Patentanspruch 2, **dadurch gekennzeichnet, dass** die besagte Vakuumpumpe (PV) den Druck in dem besagten Formwerkzeug (S) reduziert und die Verdampfung des besagten Fluids bei Temperaturen unter 100 °C zulässt, wenn das besagte Entlüftungsventil (Vs) geöffnet ist.

4. Wärmeregulierungskreis (1) nach Patentanspruch 2, **dadurch gekennzeichnet, dass** die besagte Vakuumpumpe (PV) den Druck in dem besagten Formwerkzeug (S) reduziert und damit auch jegliche Belastung an den Rohren und Kreisen des Formwerkzeugs selbst reduziert, wenn das besagte Entlüftungsventil (Vs) geschlossen ist, das heißt, wenn der Kreis (1) geschlossen ist und unter Druck steht und während das im Kreis (1) zirkulierende Fluid erwärmt wird.

5. Wärmeregulierungskreis (1) nach vorstehenden Patentansprüchen, **dadurch gekennzeichnet, dass** er außerdem wenigstens eine Kühlleitung (12) zwischen der besagten Rezirkulationspumpe (Pr) und der besagten Vakuumpumpe (PV) umfasst, wobei die besagte Kühlleitung (12) wenigstens einen Austauscher (Sc) umfasst, in den ein Teil des stromabwärts der besagten Rezirkulationspumpe (Pr) aus dem Kreis auslaufenden Fluids (F7) einfließt und mit einer Kühlflüssigkeit (Ci) mit niedriger Temperatur Wärme austauscht, und wobei das abgekühlte, aus dem besagten Austauscher (Sc) ausfließende Fluid (F8) in die besagte Vakuumpumpe (PV) eingeleitet und mit dem besagten, aus dem besagten Formwerkzeug (S) ausfließenden Fluid (F3) sowie mit dem besagten Fluid (F4), das in dem besagten Bypass (B) zirkuliert, vermischt wird.

6. Wärmeregulierungskreis (1) nach vorstehenden Patentansprüchen, **dadurch gekennzeichnet, dass** er ein oder mehrere Steuerventile (Vm1, Vm2, ..., Vmn) umfasst, die stromaufwärts des besagten Formwerkzeugs (S) bzw. des besagten Einsatzbereichs positioniert sind, wobei die besagten Ventile geeignet sind, in einem oder in mehreren Punkten oder Bereichen des besagten Formwerkzeugs (S) oder der besagten Einsatzbereiche eine gegebene Menge (F2) Fluid einzuspritzen.

7. Wärmeregulierungskreis (1) nach vorstehenden Patentansprüchen, **dadurch gekennzeichnet, dass** die besagte Zuleitung (11) ihrerseits wenigstens ein Speiseventil (Vc) und wenigstens eine Druckaufbaupumpe (PP) zum Einspritzen von unter Druck stehendem Fluid in wenigstens einen ersten Behälter (Sr) umfasst, und wobei das besagte Speiseventil (Vc) geschlossen wird und das Fluid über die besagte, wenigstens eine Rezirkulationspumpe (Pr) im gesamten Kreis zirkuliert, wenn der besagte Zuführvorgang abgeschlossen wurde.

8. Wärmeregulierungskreis (1) nach vorstehenden Patentansprüchen, **dadurch gekennzeichnet, dass** sich an dem besagten Zusatzbehälter (Ss) auch wenigstens ein Druckluft-Einspritzventil (Va) zur Druckverdichtung des Fluids (F6) in dem besagten Zusatzbehälter (Ss) befindet, um den Gebrauch der besagten Druckaufbaupumpe (PP) auszuschließen.

9. Wärmeregulierungskreis (1) nach vorstehenden Patentansprüchen, **dadurch gekennzeichnet, dass** der besagte Austauscher (Sc) über wenigstens ein Regelventil (Vr), das während des Schritts der Fluiderwärmung geschlossen ist und geöffnet wird, wenn das Kühlen des in den Zusatzbehälter (Ss) einfließenden Fluids (F5) erforderlich ist, mit der besagten Vakuumpumpe (PV) kommuniziert.

10. Wärmeregulierungskreis (1) nach vorstehenden Patentansprüchen, **dadurch gekennzeichnet, dass** er wenigstens ein weiteres Zwangskühlungsventil (Vfr) an der Ausgabeleitung der besagten Rezirkulationspumpe (Pr) umfasst und wobei während des Zwangskühlungsschritts, falls vorhanden, sich das besagte Zwangskühlungsventil (Vfr) schließt und die Gesamtheit des Fluids zwingt, durch den besagten Austauscher (Sc) zu fließen, bevor es in den besagten Einsatzbereich einfließen kann.

## Revendications

1. Dispositif ou circuit thermorégulateur (1) pour systèmes de coulée sous pression, systèmes de moulage, systèmes d'extrusion de matières plastiques, systèmes pour la production de verre, ou des systèmes à haute température en général comprenant au moins un moule (S) ou une zone à thermorégler ou une zone d'utilisation, ledit circuit thermorégulateur (1) comprenant au moins une ligne d'alimentation (11) apte à acheminer le fluide (F1) dans ledit circuit (1), au moins une pompe (Pr), ou une pompe de recirculation, apte à faire circuler le fluide (F1) dans ledit circuit (1) et des moyens (R, L, P2, PV) aptes à régler la température et la pression du fluide (F) circulant dans ledit circuit (1), **caractérisé en ce qu'**il comprend également :
au moins une dérivation (B) continuellement ouverte où tout ou une partie (F4) dudit fluide s'écoule, contournant ledit moule (S) ou une zone d'utilisation, ladite dérivation (B) étant positionnée entre ladite pompe de recirculation (Pr), en amont dudit moule (S) ou une zone d'utilisation, et au moins une pompe à vide (PV) ;
ladite au moins une pompe à vide (PV) apte à aspirer le fluide (F3) venant dudit moule (S) ou d'une zone d'utilisation et à le mélanger avec ledit fluide (F4) venant de ladite au moins une dérivation (B) ;
au moins un premier réservoir (Sr) apte à contenir le fluide (F1) venant de ladite ligne d'alimentation (11), ledit premier réservoir (Sr) comprenant à son tour au moins une résistance (R) pour le chauffage dudit fluide (F),
et où ledit fluide mélangé (F5) retenu dans ladite pompe à vide (PV) est directement ou indirectement introduit dans ledit réservoir (Sr) doté d'une résistance (R), de façon à ce qu'il est fait recirculer dans ledit circuit (1).

2. Circuit thermorégulateur (1) selon la revendication 1, **caractérisé en ce qu'**il comprend au moins un réservoir supplémentaire (Ss) en aval de ladite pompe à vide (PV) et en amont dudit réservoir (Sr) doté d'une résistance (R), où ledit fluide mélangé (F5), s'écoulant de ladite pompe à vide (PV), est introduit, et où au moins une soupape de purge (Vs) est montée sur ledit réservoir supplémentaire (Ss) et est apte à s'ouvrir/se fermer pour réduire/augmenter la pression et la température du fluide (F6) contenu dans le réservoir supplémentaire (Ss), ledit fluide (F6) s'écoulant dudit réservoir supplémentaire (Ss) étant introduit dans ledit réservoir (Sr) doté d'une résistance de façon à être recirculé dans ledit circuit (1).

3. Circuit thermorégulateur (1) selon la revendications 2, **caractérisé en ce que**, quand ladite soupape de purge (Vs) est ouverte, ladite pompe à vide (PV) réduit la pression à l'intérieur dudit moule (S) et permet l'évaporation dudit fluide à des températures inférieures à 100°C.

4. Circuit thermorégulateur (1) selon la revendication 2, **caractérisé en ce que**, quand ladite soupape de purge (Vs) est fermée, c'est-à-dire quand le circuit (1) est fermé et pressurisé, et alors que le fluide qui circule dans le circuit (1) est rechauffé, ladite pompe à vide (PV) réduit la pression à l'intérieur dudit moule (S), en réduisant également toute tension sur les tuyaux et les circuit du moule même.

5. Circuit thermorégulateur (1) selon les revendications précédentes, **caractérisé en ce qu'**il comprend également au moins une ligne de refroidissement (12) entre ladite pompe de recirculation (Pr) et ladite pompe à vide (PV), ladite ligne de refroidissement (12) comprenant au moins un échangeur (Sc), où une partie du fluide (F7) venant du circuit en aval de ladite pompe de recirculation (Pr) entre et échange la chaleur avec un fluide de refroidissement (Ci) à basse température, et où le fluide refroidi (F8) s'écoulant dudit échangeur (Sc) est introduit dans ladite pompe à vide (PV) et mélangé audit fluide (F3) s'écoulant dudit moule (S) et audit fluide (F4) circulant dans ladite dérivation (B).

6. Circuit thermorégulateur (1) selon les revendications précédentes, **caractérisé en ce qu'**il comprend une ou plusieurs soupapes de contrôle (Vm1, Vm2, ..., Vmn) disposées en amont dudit moule (S) ou d'une zone d'utilisation, lesdits soupapes étant aptes à l'injection d'une quantité déterminée (F2) de fluide dans un ou plusieurs points ou zones dudit moule (S) ou desdites zones d'utilisation.

7. Circuit thermorégulateur (1) selon les revendications précédentes, **caractérisé en ce que** ladite ligne d'alimentation (11) comprend à son tour au moins une soupape d'alimentation (Vc) et au moins une pompe de pressurisation (PP) pour l'injection de fluide sous pression dans au moins un réservoir (Sr), et où ladite opération d'alimentation étant achevée, ladite soupape d'alimentation (Vc) est fermée et le fluide est fait circuler dans tout le circuit au moyen de ladite au moins une pompe de recirculation (Pr).

8. Circuit thermorégulateur (1) selon les revendications précédentes, **caractérisé en ce que** sur ledit réservoir supplémentaire (Ss) au moins une soupape d'injection d'air comprimé (Va) pour la pressurisation du fluide (F6) dans le même réservoir supplémentaire (Ss) est également montée, de manière à exclure l'utilisation de ladite pompe de pressurisation (PP).

9. Circuit thermorégulateur (1) selon les revendications précédentes, **caractérisé en ce que** ledit échangeur (Sc) communique avec ladite pompe à vide (PV) au moyen d'au moins une soupape de réglage (Vr) qui reste fermée durant la phase de chauffage du fluide et est ouverte quand il est nécessaire de refroidir le fluide (F5) qui est en train de s'écouler dans le réservoir supplémentaire (Ss).

10. Circuit thermorégulateur (1) selon les revendications précédentes, **caractérisé en ce qu'**il comprend au moins une soupape de refroidissement forcé (Vfr) supplémentaire sur la ligne de refoulement de ladite pompe de recirculation (Pr) et où, durant la phase éventuelle de refroidissement forcé, ladite soupape de refroidissement forcé (Vfr) se ferme et oblige le fluide à passer complètement à travers ledit échangeur (Sc) avant d'entrer dans ladite zone d'utilisation.
